# EUROPÄISCHE PATENTSCHRIFT

(11) **EP 1 777 134 B1**
(45) Veröffentlichungstag und Bekanntmachung des Hinweises auf die Patenterteilung: **14.04.2010**
(21) Anmeldenummer: 06019526.0
(22) Anmeldetag: 19.09.2006
(51) Int. Cl.: B60T 10/02

(54) **Einrichtung zur Entlüftung eines hydrodynamischen Retarders**
Bleeding device for hydrodynamic retarder
Dispositif de décharge d'air d'un ralentisseur

(30) Priorität: 19.10.2005 DE 102005022992
(43) Veröffentlichungstag der Anmeldung: 25.04.2007
(73) Patentinhaber: ZF FRIEDRICHSHAFEN Aktiengesellschaft, 88038 Friedrichshafen (DE)
(72) Erfinder: Buri, Gerhard, 88677 Markdorf (DE); Sauter, Frank, 88074 Meckenbeuren (DE)
(74) Vertreter: Zietlow, Karl-Peter

(56) Entgegenhaltungen:
- WO-A-03/033319
- WO-A-2006/056384
- US-A- 4 711 328

## Beschreibung

Die vorliegende Erfindung betrifft eine Einrichtung zur Entlüftung eines hydrodynamischen Retarders gemäß dem in WO 2006/056 384 A2 offenbarten Oberbegriff des Patentanspruchs 1.

Bei hydrodynamischen Retardersystemen wird das Bremsmoment durch den Füllgrad des Betriebsmediums, beispielsweise des Öls, eingestellt. Hierbei wird die Strömungsenergie des Betriebsmediums zum Bremsen benutzt, wobei das physikalische Wirkprinzip dem einer hydrodynamischen Kupplung mit feststehender Turbine entspricht. Demnach weist ein hydrodynamischer Retarder mindestens einen sich im Leistungsfluss befindlichen Rotor und mindestens einen mit dem Retardergehäuse fest verbundenen Stator auf. Beim Betätigen des Retarders wird eine der gewünschten Bremsleistung entsprechende Ölmenge in den Schaufelraum eingebracht, wobei der drehende Rotor das Öl mitnimmt, das sich am Stator abstützt, wodurch eine Bremswirkung auf die Rotorwelle erzeugt wird.

Hierbei wird im Rotor/Stator-Raum eine Öl-Luft-Zusammensetzung erzeugt, was zur Folge hat, dass sich nach dem Ausschalten, also dem Entleeren des Retarders sehr stark verschäumtes Öl im Getriebe- oder Retardersumpf befindet. Bei klein dimensionierten Ausgleichs- bzw. Entspannungsräumen, wie es bei Retardem mit eigenem Ölhaushalt der Fall ist, führt dies in nachteiliger Weise zu einem Austritt von Ölschaum durch den Entlüfter des Retarders ins Freie.

Aus dem Stand der Technik sind verschiedene physikalische Prinzipien bekannt, um Ölpartikel von Luft zu trennen. Als Beispiel seien Filter, Siebe, Labyrinthe, Ventile, Zyklone und Kombinationen aus diesen Komponenten genannt.

Für Retarderanwendungen können komplex aufgebaute Module, wie beispielsweise ein Mehrstufenentlüfter, aufgrund des geringen zur Verfügung stehenden Bauraums nicht eingesetzt werden. Des weiteren sind Zyklone bei stoßartiger Luftbeaufschlagung, wie sie bei Retarderanwendungen vorkommt, nicht geeignet.

Der vorliegenden Erfindung liegt die Aufgabe zugrunde, eine Einrichtung zur Entlüftung eines hydrodynamischen Retarders anzugeben, bei der ein Austreten von Ölschaum bzw. von Luft/Betriebsmedium-Gemisch vermieden wird. Insbesondere soll eine bauraumoptimierte und kostengünstige Lösung angegeben werden, um Öl oder Ölschaum von der ausströmenden Luft zu trennen.

Diese Aufgabe wird durch die Merkmale des Patentanspruchs 1 gelöst. Weitere erfindungsgemäße Ausgestaltungen und Vorteile gehen aus den Unteransprüchen hervor.

Demnach wird eine Einrichtung zur Entlüftung eines hydrodynamischen Retarders vorgeschlagen, umfassend einen Entspannungsraum und einen Entlüfter, bei der zwischen dem Getriebe- oder Retardersumpf und dem Entspannungsraum zwei Rückschlagventile vorgesehen sind, die jeweils in entgegengesetzter Richtung wirken, wobei das eine Rückschlagventil leicht vorgespannt ist und einen Durchgang in Richtung des Entspannungsraums ermöglicht. Hierbei wird durch das Rückschlagventil beim Entlüften des Retarders ein Zerplatzen der Schaumbläschen im Luft/Betriebsmedium-Gemisch verursacht, so dass kein Schaum in den Entspannungsraum gelangen kann; über das zweite Rückschlagventil wird beim Abkühlen des Retarders die Zuführung von Luft und abgeschiedenem Betriebsmedium an den Retarder ermöglicht.

Im Rahmen einer bevorzugten Ausführungsform der Erfindung bestehen die beiden Rückschlagventile aus einem einfachen Kunststoffteil, beispielsweise einem Polymerteil, das in eine Flachdichtung eingeknüpft wird, welche zwischen einem Retardergehäuse und einem Steuergehäuse angeordnet ist. Das Kunststoffteil kann dabei steckerartig ausgebildet sein, das in die Flachdichtung gesichert eingesteckt ist und einseitig Bohrungen in der Flachdichtung abdeckt.

Des weiteren können in den Gussgehäusen von Retarder und Steuerung Kanäle und/oder Räume vorgesehen sein, die mit der dazwischenliegenden Flachdichtung bauraumoptimiert ein Labyrinth darstellen. Zusätzlich können in vorteilhafter Weise in diesen Kanälen und/oder Räumen Filtermaterialien, Siebe und/oder Geräuschdämpfer eingelegt werden.

Im Rahmen einer vorteilhaften Weiterbildung wird vorgeschlagen, dass die Luft vom Retarder durch das Grundgetriebe und den dort vorhandenen Entlüfter geführt wird, so dass ein separater Retarderentlüfter entfällt.

Durch die erfindungsgemäße Konzeption, insbesondere durch die in die Gehäuse integrierte Bauweise, wird eine bauraumoptimierte Entlüftung realisiert; zudem werden im Vergleich zu aufgeschraubten Entlüftern relativ große Sammelräume zur Verfügung gestellt. Ein weiterer Vorteil besteht darin, dass durch die Verwendung von einfachen und kostengünstigen Rückschlagventilen die Herstellungskosten gering gehalten werden.

Die Erfindung wird im Folgenden anhand der beigefügten Zeichnungen beispielhaft näher erläutert.
Es stellen dar:
- Fig. 1: eine schematische Schnittansicht einer bevorzugten Ausführungsform einer erfindungsgemäßen Einrichtung zur Entlüftung eines hydrodynamischen Retarders in der Entlüftungsphase und
- Fig. 2: eine schematische Schnittansicht einer bevorzugten Ausführungsform einer erfindungsgemäßen Einrichtung zur Entlüftung eines hydrodynamischen Retarders in der Abkühlphase des Retarders.

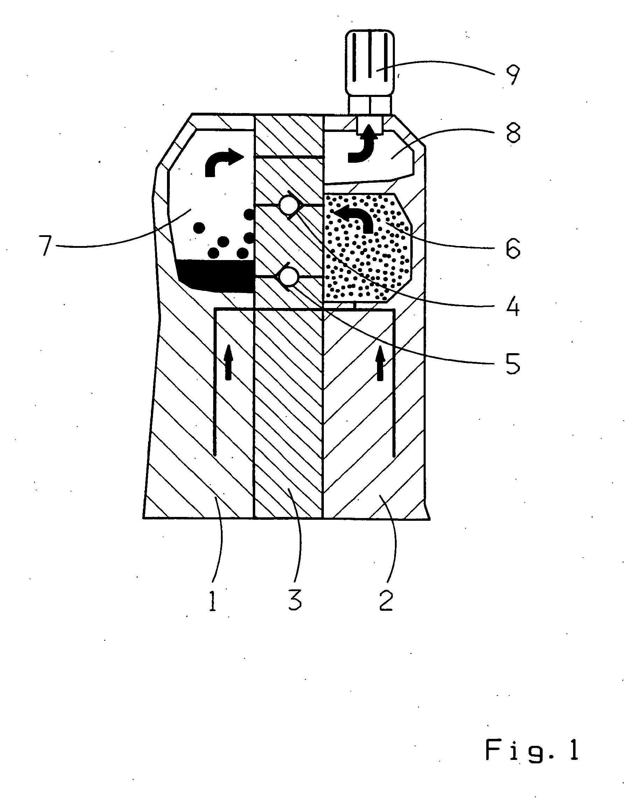

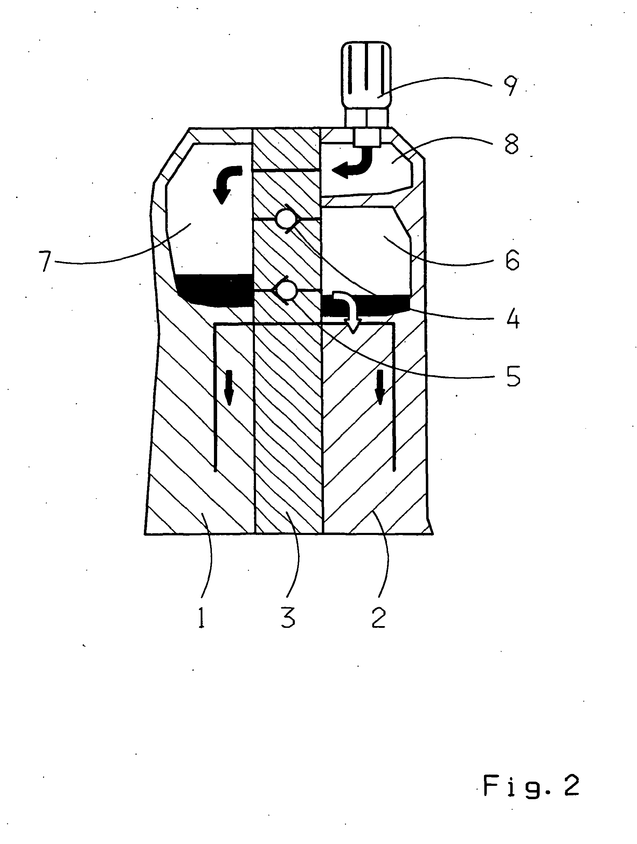

In den Fig. 1 und 2 ist ein erstes Gehäuse, welches das Retardergehäuse sein kann, mit 1 und ein zweites Gehäuse, welches das Steuergehäuse sein kann, mit 2 bezeichnet. Gemäß der Erfindung ist zwischen dem Gehäuse 1 und dem Gehäuse 2 eine Flachdichtung 3 vorgesehen, in die zwei Rückschlagventile 4, 5 integriert sind, welche jeweils in entgegengesetzter Richtung wirken. In der Entlüftungsphase strömt, wie in Fig. 1 anhand der Pfeile gezeigt, der unter Druck stehende Ölschaum bzw. das unter Druck stehende Luft/Betriebsmedium-Gemisch in den im Gehäuse 2 vorgesehenen Entlüftungskanal 6, wo das leicht vorgespannte Rückschlagventil 4 ein Zerplatzen der Schaumbläschen verursacht, so dass kein Schaum in den im Gehäuse 1 vorgesehenen Entspannungsraum 7 gelangen kann. Anschließend strömt die Luft über den vorzugsweise im Gehäuse 2 vorgesehenen Entlüfterraum 8 und den Entlüfter 9 ins Freie.

Beim Abkühlen des Retarders wird Luft und das abgeschiedene Öl bzw. das abgeschiedene Betriebsmedium über das zweite Rückschlagventil 5 dem Retarder zugeführt, wie in Fig. 2 anhand der Pfeile veranschaulicht.

Selbstverständlich fällt auch jede konstruktive Ausbildung, insbesondere jede räumliche Anordnung der Elemente der erfindungsgemäßen Einrichtung zur Entlüftung eines hydrodynamischen Retarders an sich sowie zueinander und soweit technisch sinnvoll, unter den Schutzumfang der vorliegenden Ansprüche, ohne die Funktion der Einrichtung, wie sie in den Ansprüchen angegeben ist, zu beeinflussen, auch wenn diese Ausbildungen nicht explizit in den Figuren oder in der Beschreibung dargestellt sind.

### Bezugszeichen

- 1: erstes Gehäuse
- 2: zweites Gehäuse
- 3: Flachdichtung
- 4: Rückschlagventil
- 5: Rückschlagventil
- 6: Entlüftungskanal
- 7: Entspannungsraum
- 8: Entlüfterraum
- 9: Entlüfter

## Patentansprüche

1. Einrichtung zur Entflüftung eines hydrodynamischen Retarders, umfassend einen Entspannungsraum (7), einen Entlüften (9), zwei Rückschlagventile (4,5) die jeweils zwischen dem Getriebe- oder Retardersumpf und dem Entspannungsraum (7) in entgegengesetzter Richtung wirken, **dadurch gekennzeichnet, dass** des Rückschlagventil (4) leicht vorgespannt ist und einen Durchgang in Richtung des Entspannungsraums (7) ermöglicht, wobei beim Entlüften des Retarders ein Zerplatzen der Schaumbläschen im Luft/Betriebsmedium-Gemisch verursacht wird, so dass kein Schaum in den Entspannungsraum (7) gelangen kann, und wobei das zweite Rückschlagventil (5) beim Abkühlen des Retarders die Zuführung von Luft und abgeschiedenem Betriebsmedium an den Retarder ermöglicht.

2. Einrichtung zur Entlüftung eines hydrodynamischen Retarders nach Anspruch 1, **dadurch gekennzeichnet, dass** die Rückschlagventile (4, 5) aus einem einfachen Kunststoffteil, beispielsweise einem Polymerteil, bestehen, das in eine Flachdichtung (3) eingeknüpft ist, welche zwischen einem ersten Gehäuse (1) und einem zweiten Gehäuse (2) angeordnet ist.

3. Einrichtung zur Entlüftung eines hydrodynamischen Retarders nach Anspruch 1 oder 2, **dadurch gekennzeichnet, dass** im ersten Gehäuse (1) und im zweiten Gehäuse (2) Kanäle (6) und/oder Räume (7, 8) vorgesehen sind, die mit der dazwischenliegenden Flachdichtung (3) bauraumoptimiert ein Labyrinth darstellen.

4. Einrichtung zur Entlüftung eines hydrodynamischen Retarders nach Anspruch 3, **dadurch gekennzeichnet, dass** in den Kanälen (6) und/oder Räumen (7, 8) Filtermaterialien, Siebe und/oder Geräuschdämpfer angeordnet sind.

5. Einrichtung zur Entlüftung eines hydrodynamischen Retarders nach einem der vorangehenden Ansprüche, **dadurch gekennzeichnet, dass** in einem der Gehäuse (1, 2) ein Entlüftungskanal (6) vorgesehen ist, und dass die Rückschlagventile (4, 5) zwischen dem Entlüftungskanal (6) und dem im jeweils anderen der Gehäuse (2, 1) vorgesehenen Entspannungsraum (7) angeordnet sind.

6. Einrichtung zur Entlüftung eines hydrodynamischen Retarders nach einem der vorangehenden Ansprüche, **dadurch gekennzeichnet, dass** in einem der Gehäuse (1, 2) ein Entlüfterraum (8) vorgesehen ist, in den Luft vom Entspannungsraum (7) hineinströmen kann.

7. Einrichtung zur Entlüftung eines hydrodynamischen Retarders nach einem der vorangehenden Ansprüche, **dadurch gekennzeichnet, dass** die Entlüftung in das Getriebe erfolgt und als Entlüfter der Entlüfter des Getriebes verwendet wird, so dass ein separater Retarderentlüfter (9) entfällt.

## Claims

1. Device for bleeding a hydrodynamic retarder, comprising an expansion space (7) and a bleeding device (9), **characterized in that** two non-return valves (4, 5), which respectively act in opposite directions, are provided between the gearbox or retarder sump and the expansion space (7), wherein the one non-return valve (4) is slightly prestressed and permits passage in the direction of the expansion space (7), wherein, when the retarder is bled, the foam bubbles in the air-operating medium mixture are caused to burst, with the result that no foam can pass into the expansion space (7), and wherein, when the retarder cools, the second non-return valve (5) permits air and precipitated operating medium to be fed to the retarder.

2. Device for bleeding a hydrodynamic retarder according to Claim 1, **characterized in that** the non-return valves (4, 5) are composed of a simple plastic part, for example a polymer part, which is clipped into a flat seal (3) which is arranged between a first housing (1) and a second housing (2).

3. Device for bleeding a hydrodynamic retarder according to Claim 1 or 2, **characterized in that** ducts (6) and/or spaces (7, 8), which constitute a labyrinth in a way which is optimized in terms of installation space with the flat seal (3) lying therebetween, are provided in the first housing (1) and in the second housing (2).

4. Device for bleeding a hydrodynamic retarder according to Claim 3, **characterized in that** filter materials, sieves and/or noise dampers are arranged in the ducts (6) and/or spaces (7, 8).

5. Device for bleeding a hydrodynamic retarder according to one of the preceding claims, **characterized in that** a bleeding duct (6) is provided in one of the housings (1, 2), and **in that** the non-return valves (4, 5) are arranged between the bleeding duct (6) and the expansion space (7) which is provided in the respective other housing (2, 1).

6. Device for bleeding a hydrodynamic retarder according to one of the preceding claims, **characterized in that** a bleeder space (8), into which air can flow from the expansion space (7), is provided in one of the housings (1, 2).

7. Device for bleeding a hydrodynamic retarder according to one of the preceding claims, **characterized in that** the bleeding occurs into the gearbox, and the bleeding device of the gearbox is used as the bleeding device, with the result that a separate retarder bleeding device (9) is dispensed with.

## Revendications

1. Dispositif de décharge d'air d'un ralentisseur hydrodynamique, comprenant un espace de détente (7) et un purgeur (9), **caractérisé en ce qu'**entre le puisard de la transmission ou du ralentisseur et l'espace de détente (7) sont prévues deux soupapes de non-retour (4, 5), qui agissent chacune dans des sens opposés, l'une des soupapes de non-retour (4) étant légèrement précontrainte et permettant un passage dans la direction de l'espace de détente (7), lors de la décharge d'air du ralentisseur, un éclatement des bulles de mousse dans le mélange air/fluide de travail étant provoqué, de sorte qu'il ne puisse pas pénétrer de mousse dans l'espace de détente (7), et la deuxième soupape de non-retour (5), lors du refroidissement du ralentisseur, permettant l'alimentation en air et en fluide de travail séparé au ralentisseur.

2. Dispositif de décharge d'air d'un ralentisseur hydrodynamique selon la revendication 1, **caractérisé en ce que** les soupapes de non-retour (4, 5) se composent d'une simple partie en plastique, par exemple une partie en polymère, qui est incorporée dans une garniture d'étanchéité plate (3), qui est disposée entre un premier boîtier (1) et un deuxième boîtier (2).

3. Dispositif de décharge d'air d'un ralentisseur hydrodynamique selon la revendication 1 ou 2,
**caractérisé en ce que** des canaux (6) et/ou des espaces (7, 8) sont prévus dans le premier boîtier (1) et dans le deuxième boîtier (2), lesquels constituent avec la garniture d'étanchéité plate interposée (3) un labyrinthe d'encombrement optimisé.

4. Dispositif de décharge d'air d'un ralentisseur hydrodynamique selon la revendication 3, **caractérisé en ce que** des matériaux filtrants, des tamis et/ou des atténuateurs sonores sont disposés dans les canaux (6) et/ou les espaces (7, 8).

5. Dispositif de décharge d'air d'un ralentisseur hydrodynamique selon l'une quelconque des revendications précédentes, **caractérisé en ce que** dans l'un des boîtiers (1, 2) est prévu un canal de décharge d'air (6) et **en ce que** les soupapes de non-retour (4, 5) sont disposées entre le canal de décharge d'air (6) et l'espace de détente (7) prévu dans l'autre des boîtiers respectif (2, 1).

6. Dispositif de décharge d'air d'un ralentisseur hydrodynamique selon l'une quelconque des revendications précédentes, **caractérisé en ce que** dans l'un des boîtiers (1, 2) est prévu un espace de purgeur (8), dans lequel de l'air peut affluer depuis l'espace de détente (7).

7. Dispositif de décharge d'air d'un ralentisseur hydrodynamique selon l'une quelconque des revendications précédentes, **caractérisé en ce que** la décharge d'air s'effectue dans la transmission et l'on utilise comme purgeur le purgeur de la transmission, de sorte que l'on peut se passer d'un purgeur de ralentisseur séparé (9).
